# EUROPEAN PATENT APPLICATION

(11) **EP 1 139 630 A1**
(43) Date of publication of application: **04.10.2001**
(21) Application number: 00106506.9
(22) Date of filing: 25.03.2000
(51) Int. Cl.: H04L 29/06

(54) **A method and a system for ordering services**

(71) Applicant: Jakob Schmelling Ludvigsen, 9000 Aalborg (DK)
(72) Inventor: Jakob Schmelling Ludvigsen, 9000 Aalborg (DK)
(74) Representative: Nielsen, Leif

(57) **Abstract**

In order to order some goods or service, the user approaches the terminal unit 1 of the service provider. To order the service, the user calls 3 the service providers terminal unit 1 with the mobile communication apparatus 2 to order a service. The terminal unit 1 registers the identification code and transmits 4 information and conditions related to the service to the user's mobile communication apparatus 2, where this information is shown on a display 14. For accept of the service and the service conditions, the user indicates the acceptance of the service conditions which is transmitted 5 to the terminal unit, after which the connection between the mobile communication unit and the terminal unit is terminated. The terminal unit transmits 6, for example via a telephone line, the received data to the host computer 7 where the data are controlled in connection with the service. The control may include a check, whether the user has credit enough for payment of the order. After the control, the terminal unit receives 8 indications from the host computer 7 whether to accept the data from the user for providing the service. Acceptance may be indicated by a signal 9 at the terminal unit, for example by an audio-visual indication, after which the service is provided.

## Description

The present invention relates to a method for ordering services from a mobile communication apparatus, for example a mobile telephone. It relates further to a system for this method.

A number of different service ordering methods and devices are known. The service ordering in some cases includes payment of the order. The ordering device in the most simple version is payment for goods to be purchased. Eventually, the goods are received manually.

US patent with number 5 986 565 discloses an individual recognition system that uses a mobile communication apparatus to more securely conduct financial data transactions. A call number stored in a mobile communications apparatus (mobile telephone) is read by a terminal unit and transmitted to a computer. The computer calls the telephone and requests a user to input a personal identification code. The personal identification code is transmitted from the mobile communications apparatus to the computer, so that the transmitted personal identification code is compared with a previously registered personal identification code for verification. Then, a purchase price is read into the terminal unit and transmitted to the computer. Settlement for payment of the purchase price is carried out in a bank account.

A financial transaction by this system requires a connection between the mobile telephone and the terminal unit. In case that the telephone is connected to the terminal unit by a wire connection or by a connection in a special holder, it is required that the user is present at the terminal unit to perform the financial transaction. Especially, if the financial transaction implies paying a parking fee late at night in an else empty parking lot, this action implies great risk for the user to be assaulted. To avoid these situations, the individual recognition system has foreseen a wireless communication link. However, this implies a first call from the mobile telephone to the terminal unit and a second call from the computer to the mobile phone. Between the first call and the second call, it is of great disadvantage, if the telephone is retrieving a call from a third person, because that call is blocking for the second call from the computer. In busy situations, this form for payment can be irritating for the buyer, the seller and further customers standing in line waiting for their chance to pay.

Furthermore, this kind of purchase is only possible in areas geographically covered by the wireless telephone network.

### SUMMARY OF THE INVENTION

It is an object of the invention to provide a method and an apparatus to improve and increase the efficiency of methods for ordering services, for example including financial transactions.

According to the invention, this is achieved by a method as described in claim 1.

The method includes mainly three devices able to be connected, a host computer system, a terminal unit and a mobile communication apparatus.

The holder of the mobile communication apparatus, which is called the user, and the service provider are registered in memory records of the host computer. For example, the host computer could be a computer in a financing institute as a bank. In this case, the host computer controls financial transactions between the user and the service provider. Alternatively, the host computer could be a computer central for a library, where all book loans from small local library units are controlled. Other examples for services using financial or non-financial transactions can easily be found with regard to the present invention.

The service provided could, for example, be delivery of goods and the service provider could be a local store, where the goods are purchased. The ordering may include payment of the service. The service could also be, as described above, loan of certain books from the service provider, which in this case is the local library. In the latter case, no payment is included in the transaction, but due to the value of the books, it is essential that the user is identified by the identification number of the communication apparatus and a security code.

The terminal unit is typically located at the place, where the service is provided. However, it is only necessary that the terminal unit is located, where the order from the user is given. In case that the user is driving in a car, the user needs not to leave the car for ordering services, because there is a wireless communication link between the mobile communication apparatus and the terminal unit. Therefore, the invention is very suitable for drive-in stores, drive in cinemas, or parking lots.

The mobile communication apparatus can, for example, be a mobile telephone connected to a public or a private telephone system. It can however also be a communication apparatus especially made for this kind of transaction. Such an apparatus could differ from a mobile telephone by not being connected to a public telephone system, and/or by not having a speaker unit and microphone. Also, for the mobile communication apparatus, it is not necessary to have a keypad. Such a mobile apparatus could be produced much cheaper than mobile telephones and much smaller. For example, such a mobile apparatus could have the overall dimensions of a credit card, which would make it much easier to carry around, for example in a wallet.

According to the invention, service information and conditions are displayed to the user. For example, the information may include the price of a service. The display can be a part of the terminal unit or functionally attached to the terminal unit. Alternatively, the mobile communication apparatus can be equipped with a display, so that the service information and service conditions are transmitted from said terminal unit to the mobile communication apparatus and displayed on the display of the mobile communication apparatus. Latter display method is preferred.

The wireless link can be a generally accessible public or private telephone system. But it can also be a link using infrared radiation for the data transfer.

Alternatively, it can be a different radio system, like the so-called Bluetooth system, which is a short range radio link for electronic devices. The Bluetooth system is independent of existing networks and operates at 2.4 GHz directly between electronic devices. It has a range of up 100 m. Use of Bluetooth radio link has a great advantage over existing telephone networks, because it is independent of any network and the implicit network conditions as, for example, geographical network coverage. By using Bluetooth, a terminal unit may register a mobile communication apparatus in its vicinity, which is able to communicate data with Bluetooth specifications. Optionally all Bluetooth using service providers may transmit their offers to the mobile communication apparatus, where the offers are displayed in the display and where the user may choose from the provided service offers.

The Bluetooth wireless link may be provided as an additional option for mobile telephone holders, where the necessary hardware for the Bluetooth system is incorporated in the telephone. Additional the mobile telephone may be provided with technology comprising the so-called Wireless Application Protocol, WAP. Thereby, also Internet options may be integrated into the system. Alternatively, the mobile communication apparatus may be an especially constructed unit for Bluetooth operation.

The wireless link is not limited to one of the mentioned possibilities, but can also comprise a combination of different links.

Possible Wap applications may include retrieval of account information and other financial transfers.

### BRIEF DESCRIPTION OF THE DRAWING

- Fig. 1: is an explanatory view showing a method for ordering services according to a preferred embodiment of the invention,
- Fig. 2: is an explanatory view showing a method for ordering services according to a second preferred embodiment of the invention, where a Bluetooth system is incorporated.

### DETAILED DESCRIPTION OF THE INVENTION

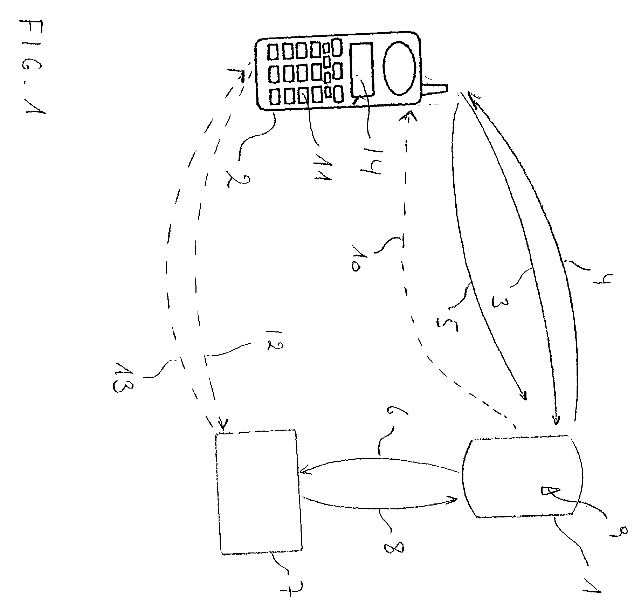

Fig. 1 is an explanatory view showing a method for ordering services according to a preferred embodiment of the invention. In order to order some goods or service, the user approaches the terminal unit 1 of the service provider. To order the service, the user calls 3 the service providers terminal unit 1 with the mobile communication apparatus 2, preferably a telephone, to order a service. The terminal unit 1 registers the identification code, for example the telephone number and transmits 4 information and conditions related to the service to the user's mobile communication apparatus, where this information is shown on a display. Alternatively, the information may be shown on a different display which is functionally connected to the terminal unit.

Acceptance of the service and the service conditions, is indicated by the user, for example by entering a user identifying security code, after which the security code or an equivalent for the security code is transmitted 5 to the terminal unit 1.

After the transmission, the connection between the mobile communication unit and the terminal unit may be terminated.

The terminal unit 1 transmits 6, for example via a telephone line, the received data to the host computer 7. The date may comprise the security code and the identification code. However, for security reasons, the datastream from the terminal unit 1 to the host computer 7 may be encrypted and only implicit contain the security code, for example by employing the security code in the encryption of the information. In the host computer, the data are controlled in connection with the service. The control may include a check, whether the user has credit enough for payment of the order. After the control, the terminal unit 1 receives 8 indications from the host computer 7 whether to accept the data from the user for providing the service. Acceptance may be indicated by a signal 9 at the terminal unit 1, for example by an audio-visual indication, after which the service is provided. Optionally, an additional notification is provided 10 to the mobile communication apparatus 2 via the so-called Short Message Service, SMS. Preferably, this message is sent from terminal unit 1 to the mobile communication apparatus 2, but the message can also be sent to the mobile communication apparatus 2 from the host computer 7.

The security code from the user may be an alphanumeric code read by a keypad 11 in the mobile communication apparatus 2. Alternatively, the security code may be a data stream that is obtained from a fingerprint sensor (not shown) on the mobile communication apparatus 2. In order to provide the security code, the user places a certain finger on the mobile communication apparatus 2, after which the code is transmitted 4 to the terminal unit 1.

The mobile communication apparatus 2 may additionally be used for contacting 12 the host computer 7 and retrieve 13 information about the registered transactions and the account status. However, this action may, but need not, be performed at a later time and independently from the original service order.

The security code may be linked to the hardware in the mobile communication apparatus 2, for example a smart card, or to the software in the apparatus 2. Transmission of the data from the mobile communication apparatus 2 may comprise DTMF tones. Alternatively, the transfer of data from the mobile communication apparatus 2 to the terminal unit 1 may be encrypted, so that unauthorised persons cannot read the code during transmission.

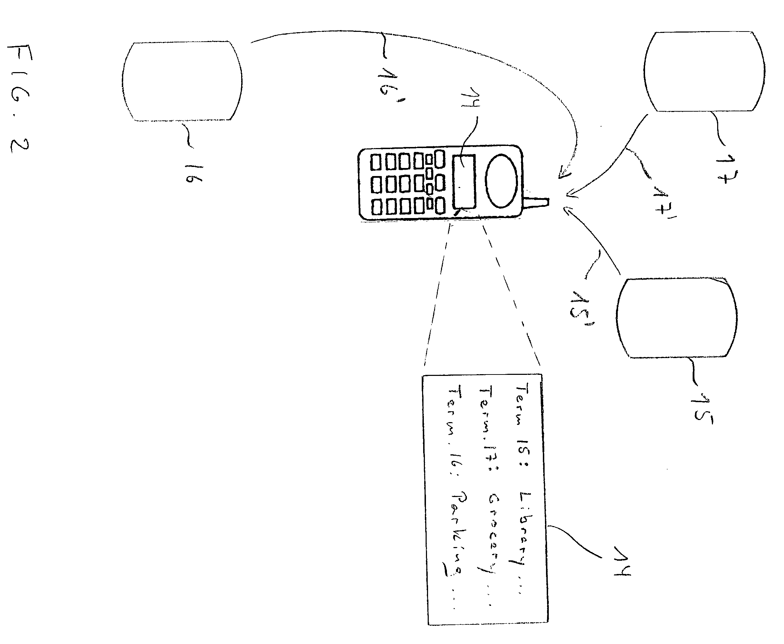

Fig. 2 is an explanatory view showing a method for ordering services according to a second preferred embodiment of the invention, where a Bluetooth system is incorporated. When the mobile communication apparatus, preferably a telephone 2, is located within one or a plurality 15, 16, 17 of possible terminal units with Bluetooth transmitters, each of the terminal units 15, 16, 17 transmits 15', 16', 17' to the telephone 2 data of possible services. A list of possible services corresponding to the different service is then shown on the display 14 of the telephone. The display is shown expanded in Fig. 2.

The software for the service ordering may be provided by a smartcard in the telephone linked to the Bluetooth system. The user can scroll through the service offers and thereupon establish a link to the terminal unit 15, 16, or 17 of interest. Once the wireless link to the terminal unit 15, 16, or 17 has been established, the ordering method is analogous to the method as explained in connection with Fig. 1.

## Claims

1. A method for ordering services via a service provider's terminal unit, a host computer system connected to said terminal unit, and a user's mobile communication apparatus operable to communicate with said terminal unit by a wireless link, wherein said mobile communication apparatus comprises an identification code, and reading means , wherein the method comprises the steps of
- storing and maintaining in said host computer system records of information of said user and of said service provider,
- establishing a communication connection between said mobile communication apparatus and said terminal unit for specifying the user's request of a service provided by said service provider,
- transmitting said identification code to said terminal unit,
- displaying service information and conditions on a display,
- reading information input comprising a security code from said user by said reading means for accepting said service conditions and transmitting an order comprising a datastream characteristic for said identification code and said security code to said terminal unit,
- transmitting said datastream characteristic for said identification code and said security code and service information from said terminal unit to said host computer system,
- storing and controlling in said host computer system the congruence of said identification code, said security code, said service provider and said provided service according to said records and transmitting a signal from said host computer system to said terminal unit for acceptance of said order,
- after which said service is provided and an indication is given by said terminal unit that said service is provided.

2. A method according to claim 1, **characterised in that** said display is functionally connected to said terminal unit.

3. A method according to claim 1, **characterised in that** said method further comprises transmitting service information and service conditions from said terminal unit to said mobile communication apparatus and displaying said information and conditions on a display of said mobile communication apparatus,

4. A method according to claim 1 - 3, **characterised in that** said reading means comprise a keypad for retrieving alphanumeric information.

5. A method according to claim 1 - 4, **characterised in that** said reading means comprises a fingerprint sensor.

6. A method according to claim 1 - 5, **characterised in that** said mobile communication apparatus comprises a cellular telephone.

7. A method according to claim 1 - 6, **characterised in that** said wireless link comprise a generally accessible telecommunication network.

8. A method according to claim 1 - 7, **characterised in that** said wireless link comprises a short range radio link, preferably a Bluetooth radio link.

9. A method according to claim 1 - 8, **characterised in that** said wireless link comprises infrared sensors and transmitters.

10. A system for a method according to claim 1 - 9.
